# EUROPÄISCHE PATENTSCHRIFT

(11) **EP 3 682 730 B1**
(45) Veröffentlichungstag und Bekanntmachung des Hinweises auf die Patenterteilung: **24.11.2021**
(21) Anmeldenummer: 19151913.1
(22) Anmeldetag: 15.01.2019
(51) Int. Cl.: A01G 20/47

(54) **GEBLÄSEEINHEIT FÜR EIN HANDGEFÜHRTES BLASGERÄT**
FAN UNIT FOR A HAND-HELD BLOWING DEVICE
UNITÉ SOUFFLANTE POUR UN SOUFFLEUR PORTABLE

(43) Veröffentlichungstag der Anmeldung: 22.07.2020
(73) Patentinhaber: Andreas Stihl AG & Co. KG, 71336 Waiblingen (DE)
(72) Erfinder: Klingler, Simon, 70188 Stuttgart (DE); Stürzel, Thilo, 73630 Remshalden (DE); Gindele, Cornelius, 73207 Plochingen (DE); Zauner, Markus, 70736 Fellbach (DE); Kaminski, Silke, 71336 Waiblingen (DE); Siller, Ulrich, 53332 Bornheim (DE); Kröger, Georg, 50968 Köln (DE); Barth, Christian, 71404 Korb (DE); Menzel, Johannes, 73249 Wernau/Neckar (DE)
(74) Vertreter: Wasmuth, Rolf

(56) Entgegenhaltungen:
- CN-U- 206 815 252
- US-A1- 2016 298 635
- US-A1- 2018 163 750

## Beschreibung

Die Erfindung betrifft eine Gebläseeinheit für ein tragbares, handgeführtes Blasgerät mit einem Gehäuseabschnitt und einem im Gehäuseabschnitt ausgebildeten, rohrförmigen Aufnahmeraum. Der Aufnahmeraum hat ein erstes axiales Ende und ein zweites axiales Ende sowie eine Längsmittelachse. Ein Axialgebläse zur Erzeugung eines Blasluftstroms ist in dem Aufnahmeraum des Gehäuseabschnitts angeordnet und wird von einem Antriebsmotor angetrieben. Die zentrale Gebläsenabe des Axialgebläses liegt zur Längsmittelachse des Aufnahmeraums ausgerichtet, wobei der Aufnahmeraum an seinem ersten axialen Ende eine Ansaugöffnung und an seinem zweiten axialen Ende eine Ausblasöffnung aufweist.

Ist der Antriebsmotor als elektrischer Antriebsmotor ausgebildet, ist das Betriebsgeräusch der Gebläseeinheit im Vergleich zu einem von einem Verbrennungsmotor angetriebenen Axialgebläse geringer. Im Betrieb eines Axialgebläses ergeben sich durch das Axialgebläse selbst Geräuschanregungen, die über die Ansaugöffnung axial austreten und eine Lärmbelastung für die Umwelt bilden.

Der Erfindung liegt die Aufgabe zugrunde, eine Gebläseeinheit mit einem Axialgebläse für ein tragbares, handgeführtes Arbeitsgerät derart auszubilden, dass die Betriebsgeräusche der Gebläseeinheit abgesenkt sind.

Gebläseeinheiten mit geringeren Betriebsgeräuschen sind aus dem Stand der Technik bekannt, siehe zum Beispiel Dokument US 2018/0163750 A1.

Die Aufgabe wird bei einer gattungsgemäßen Gebläseeinheit dadurch gelöst, dass mit einem axialen Abstand vor der Ansaugöffnung eine Luftleitplatte angeordnet ist, wobei die Luftleitplatte Außenabmessungen aufweist, die größer als die Außenabmessungen der Ansaugöffnung sind. Dadurch ist die Ansaugöffnung des Axialgebläses abgedeckt, so dass ein axialer Schallwellenaustritt verhindert ist. Durch die in Strömungsrichtung der Ansaugluft vor der Ansaugöffnung angeordnete Luftleitplatte ergibt sich zwischen der Luftleitplatte und dem Außenrand des Gehäuseabschnitts ein Ansaugluft zuführender Spalt, der auch als Luftspalt für die einströmende Ansaugluft bezeichnet werden kann.

Da die Außenabmessungen der Luftleitplatte größer sind als die Außenabmessungen der Ansaugöffnung, muss die zutretende Ansaugluft über einen Umlenkwinkel von zumindest 90° umgelenkt werden. Die Schallabstrahlungen des Axialgebläses werden von der Luftleitplatte in Richtung auf den Aufnahmeraum zurückgeworfen und können nur teilweise über den Ringspalt austreten. Dadurch kann eine signifikante Geräuschabsenkung des Betriebsgeräusches der Gebläseeinheit erzielt werden.

Durch die Anordnung der insbesondere luftundurchlässigen Luftleitplatte vor der Ansaugöffnung erstreckt sich der Ansaugluft zuführende Spalt über einen Umfangswinkel von bis zu 360° um die Längsmittelachse des Aufnahmeraums und/oder des Gehäuseabschnitts. Dadurch kann eine große Lufteintrittsfläche bereitgestellt werden, wodurch die von der zuströmenden Ansaugluft erzeugten Ansauggeräusche reduziert sind.

Die über den Spalt eintretende Ansaugluft wird über einen Umlenkwinkel von mehr als 90°, insbesondere über einen Umlenkwinkel von bis zu 180° der Ansaugöffnung des Aufnahmeraums bzw. dem Axialgebläse zugeführt.

In Weiterbildung der Erfindung ist die Ansaugöffnung als Kreisfläche mit einem radialen Außendurchmesser ausgebildet. Die Luftleitplatte weist einen radialen Außendurchmesser auf, der größer als der radiale Außendurchmesser der Ansaugöffnung ist. Der die Ansaugluft zuführende Spalt ist vorzugsweise als Ringspalt ausgebildet.

In Weiterbildung der Erfindung weist die Luftleitplatte auf ihrer der Ansaugöffnung zugewandten Plattenseite einen Luftleitkonus auf. Der Luftleitkonus ist auf der Luftleitplatte fixiert, vorzugsweise einteilig mit der Luftleitplatte ausgebildet. Die Luftleitplatte und der Luftleitkonus bestehen insbesondere aus Kunststoff.

Der Ansaugluft zuführende Spalt zwischen der Luftleitplatte und dem Gehäuseabschnitt der Gebläseeinheit ist insbesondere als Luftzufuhrkanal weitergebildet. Der Luftzufuhrkanal ist von dem Luftleitkonus der Luftleitplatte einerseits und der Umfangswand des Gehäuseabschnitts andererseits begrenzt. Der Luftzufuhrkanal erstreckt sich somit axial zur Ansaugöffnung des Aufnahmeraums über den Abstand der Luftleitplatte vor der Ansaugöffnung. Insbesondere erstreckt sich der Luftleitkanal in Umfangsrichtung um die Längsmittelachse des Aufnahmeraums über 360°. Dadurch kann eine große Lufteintrittsfläche erzielt werden, was zu einer Absenkung des Ansauggeräuschs führt.

Der Luftzufuhrkanal ist mit einem Umlenkwinkel von mehr als 90° ausgebildet. Insbesondere ist der Luftzufuhrkanal mit einem Umlenkwinkel von 120° ausgebildet, vorzugsweise mit einem Umlenkwinkel von bis zu 180° ausgebildet.

Der Luftleitkonus liegt zentral zur Ansaugöffnung und erstreckt sich in Richtung auf die Ansaugöffnung. Der Luftleitkonus ist gleichachsig zur Längsmittelachse des Aufnahmeraums angeordnet. Ein freier Endabschnitt des Luftleitkonus liegt mit Abstand vor der Gebläsenabe des Axialgebläses. Bevorzugt ist die Stirnseite des Endabschnittes des Luftleitkonus konkav gewölbt und übergreift die Gebläsenabe des Axialgebläses berührungslos. Die konkave Stirnseite überspannt die Gebläsenabe ähnlich einem Zeltdach.

In Weiterbildung der Erfindung ist der maximale Durchmesser der Stirnseite des Luftleitkonus kleiner als der maximale Nabendurchmesser der Gebläsenabe des Axialgebläses.

Zur weiteren Geräuschdämmung kann es vorteilhaft sein, auf der äußeren Mantelfläche des Luftleitkonus eine schalldämmende Auflage aufzubringen. Insbesondere trägt die Mantelfläche des Luftleitkonus eine Schaumstoffschicht oder eine andere, geräuschdämmende Beschichtung.

In Weiterbildung der Erfindung ist der Spalt zwischen der Luftleitplatte und dem Gehäuseabschnitt durch ein Schutzgitter abgedeckt. Vorteilhaft ist die Konstruktion so ausgeführt, dass die Luftleitplatte mechanisch durch das Schutzgitter am Gehäuseabschnitt der Gebläseeinheit gehalten ist.

Die Lufteintrittsfläche des Ringspaltes liegt dem Gehäuseabschnitt bzw. der Ausblasöffnung des Aufnahmeraums zugewandt. Die Lufteintrittsfläche liegt insbesondere zur Längsmittelachse des Aufnahmeraums geneigt.

Die Ansaugöffnung des Aufnahmeraums liegt in einer Ebene, auf der die Längsmittelachse des Aufnahmeraums senkrecht steht. In bevorzugter Ausführungsform der Erfindung liegt die Luftleitplatte parallel zur Ebene der Ansaugöffnung.

Der Antriebsmotor der Gebläseeinheit ist insbesondere ein elektrischer Antriebsmotor, der zusammen mit dem Axialgebläse im Aufnahmeraum gehalten ist.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind.

Die in den Ansprüchen und/oder der Beschreibung genannten Merkmale, Vorteile und konstruktiven Ausbildungen können untereinander in beliebiger Form kombiniert werden. Der Schutzumfang der Erfindung ist durch die beigefügten Ansprüche begrenzt.

Die Zeichnungen zeigen:
- Fig. 1: in Seitenansicht eine schematische Darstellung der Gebläseeinheit,
- Fig. 2: in vergrößerter Darstellung eine Seitenansicht auf die Antriebseinheit der Gebläseeinheit mit einer vor der Ansaugöffnung des Gebläses angeordneten Luftleitplatte,
- Fig. 3: einen schematischen Schnitt durch die Gebläseeinheit nach Fig. 1,
- Fig. 4: in vergrößerter Darstellung einen Schnitt durch die in der Gebläseeinheit angeordnete Antriebseinheit mit einem Axialgebläse,
- Fig. 5: einen Schnitt durch die Antriebseinheit entsprechend Fig. 4 mit auf dem Luftleitkonus angeordneter schalldämmender Auflage.
- Fig. 6: in vergrößerter Darstellung eine weitere Ansicht auf die Antriebseinheit der Gebläseeinheit mit einer vor der Ansaugöffnung des Gebläses angeordneten Luftleitplatte.

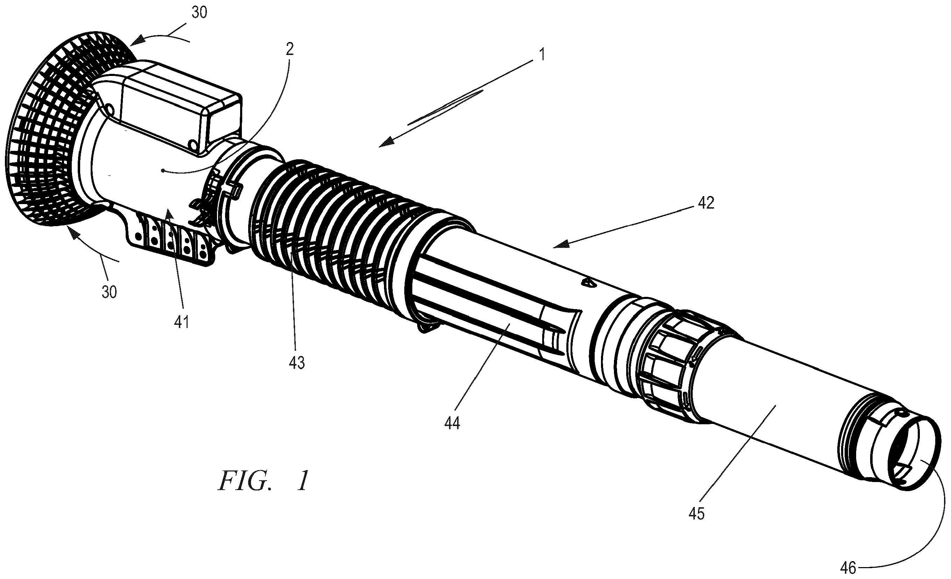

Die in Fig. 1 gezeigte Gebläseeinheit 1 ist Teil eines nicht näher dargestellten Blasgerätes. Die Gebläseeinheit 1 ist insbesondere in einem tragbaren, handgeführten Arbeitsgerät verbaut oder wird als Gebläseeinheit in anderen Blasgeräten verwendet.

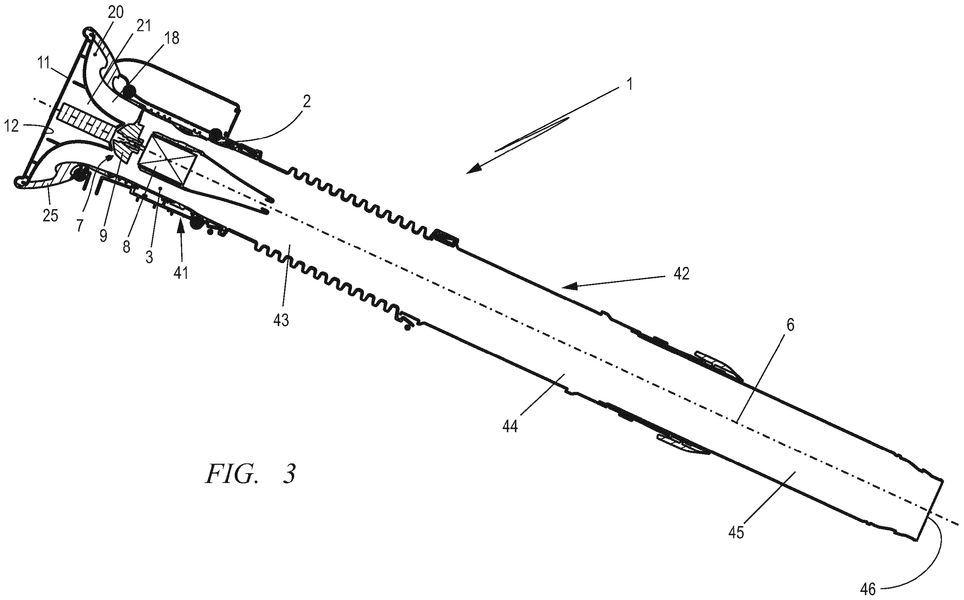

Die Gebläseeinheit 1 weist eine Antriebseinheit 41 auf, die in einem Gehäuseabschnitt 2 der Gebläseeinheit 1 vorgesehen ist. Die Antriebseinheit 41 besteht - wie insbesondere Fig. 3 zeigt - aus einem Antriebsmotor 8, der ein Axialgebläse 7 antreibt.

Das Axialgebläse 7 saugt Ansaugluft 30 aus der Umgebung an und bläst diese über ein Blasrohr 42 aus. Das Blasrohr 42 besteht im gezeigten Ausführungsbeispiel aus einem flexiblen Rohrabschnitt 43, welcher zwischen der Antriebseinheit 41 und einem starren Zwischenrohrabschnitt 44 angeordnet ist. Der Zwischenrohrabschnitt 44 mündet in ein Endrohr 45, dessen Mündung 46 ein nicht näher dargestelltes Mundstück, eine Blasdüse oder dgl. tragen kann.

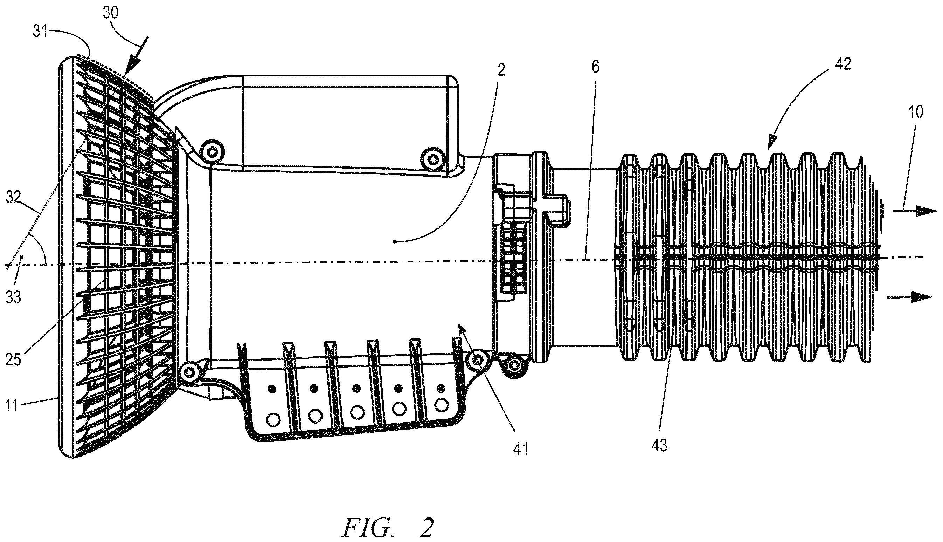

Aus der vergrößerten Darstellung nach Fig. 2 wird deutlich, dass die Ansaugluft 30 aus einer Ansaugrichtung 32 angesaugt wird, die mit einer Längsmittelachse 6 des Gehäuseabschnitts 2 einen spitzen Winkel 33 bildet. Der Winkel 33 liegt einer Luftleitplatte 11 zugewandt, die in Ansaugrichtung der Ansaugluft 30 vor dem Gehäuseabschnitt 2 angeordnet ist.

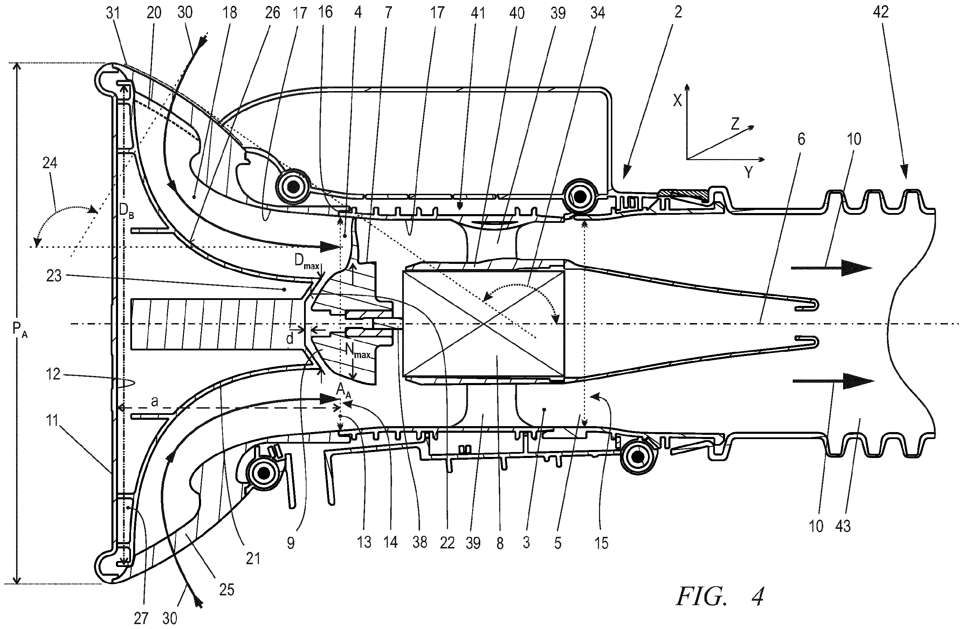

Aus Fig. 3, insbesondere aus der vergrößerten Darstellung nach Fig. 4 geht der prinzipielle Aufbau der Antriebseinheit 41 der Gebläseeinheit 1 hervor.

Im Gehäuseabschnitt 2 ist ein insbesondere rohrförmiger Aufnahmeraum 3 ausgebildet, der eine Längsmittelachse 6 aufweist. Die Längsmittelachse 6 ist vorteilhaft zugleich Längsmittelachse des Gehäuseabschnitts 2.

Der Aufnahmeraum 3 hat an einem ersten axialen Ende 4 eine Ansaugöffnung 14. Die Ansaugöffnung 14 erstreckt sich über die Höhe und die Breite des Aufnahmeraums 3. Der Aufnahmeraum 3 ist insbesondere ein zylindrischer Aufnahmeraum 3. Die Ansaugöffnung 14 bildet vorteilhaft eine Kreisfläche mit einem radialen Außendurchmesser A_{A}. Die Aufnahmeöffnung 14 bestimmt dabei eine Ebene 13, auf der insbesondere die Längsmittelachse 6 des Aufnahmeraums 3 senkrecht steht.

Der zweckmäßig rohrförmige Aufnahmeraum 3 weist ein zweites axiales Ende 5 auf, welches eine Ausblasöffnung 15 bildet. Ist der Aufnahmeraum 3 rohrförmig ausgebildet, bildet die Ausblasöffnung 15 eine Kreisfläche.

Die Ansaugöffnung 14 und die Ausblasöffnung 15 sind vorzugsweise gleich ausgebildet. Die Ansaugöffnung 14 weist insbesondere den gleichen Flächenquerschnitt auf wie die Ausblasöffnung 15. Die Ausblasöffnung 15 liegt bevorzugt parallel zur Ebene 13 der Ansaugöffnung 14. Zweckmäßig liegt die Ansaugöffnung 14 des Aufnahmeraums 3 in einer Ebene 13, auf der die Längsmittelachse 6 des Aufnahmeraums 3 bzw. des Gehäuseabschnitts 2 senkrecht steht

Im Aufnahmeraum 3 ist ein Antriebsmotor 8 gehalten, der ein Axialgebläse 7 antreibt. Vorteilhaft ist der Antriebsmotor 8 ein elektrischer Antriebsmotor. Im gezeigten Ausführungsbeispiel ist der Antriebsmotor 8 in einer Manschette 40 gehalten, die über radiale Haltestreben 39 im Aufnahmeraum 3 fixiert ist. Die Anordnung ist so getroffen, dass die Drehachse des Antriebsmotors 8 achsgleich mit der Längsmittelachse 6 des Aufnahmeraums 3 liegt. Auf der Motorwelle 38 des Antriebsmotors 8 ist drehfest die Gebläsenabe 9 des Axialgebläses 7 gehalten. Wird das Axialgebläse 7 vom Antriebsmotor 8 angetrieben, wird Ansaugluft 30 über die Ansaugöffnung 14 in den Aufnahmeraum 3 angesaugt. Über die Ausblasöffnung 15 wird die Ansaugluft 30 als Blasluftstrom 10 in das Blasrohr 42 ausgeblasen.

Wie die Figuren 3 und 4 zeigen, liegt vor der Ansaugöffnung 14 des Aufnahmeraums 3 eine Luftleitplatte 11. Die Luftleitplatte 11 ist insbesondere luftundurchlässig ausgebildet. Die Luftleitplatte 11 trägt auf ihrer der Ansaugöffnung 14 zugewandten Plattenseite 12 einen Luftleitkonus 21. Die Luftleitplatte 11 und der Luftleitkonus 21 sind vorteilhaft als einteiliges Bauteil ausgebildet. Die Luftleitplatte 11 und/oder der Luftleitkonus 21 bestehen vorzugsweise aus Kunststoff.

Die Luftleitplatte 11 liegt mit einem Abstand a vor der Ansaugöffnung 14 des Aufnahmeraums. Der Luftleitkonus 21 ragt von der Luftleitplatte 11 in Richtung auf die Ansaugöffnung 14 und endet vor der Gebläsenabe 9. Insbesondere liegt die Hochachse des Luftleitkonus 21 gleichachsig zur Längsmittelachse des Aufnahmeraums 3 bzw. des Gehäuseabschnitts 2.

Die Luftleitplatte 11 weist Außenabmessungen auf, die größer als die Außenabmessungen der Ansaugöffnung 14 sind. In Axialrichtung gesehen deckt die Luftleitplatte 11 die Ansaugöffnung 14 vollkommen ab. Die Luftleitplatte 11 hat vorteilhaft die gleiche geometrische Form wie die Ansaugöffnung 14, ist jedoch in den Flächenmaßen größer ausgebildet als die Ansaugöffnung 14. Durch das Axialgebläse erzeugte Schallwellen können nicht unmittelbar axial aus der Gebläseeinheit austreten.

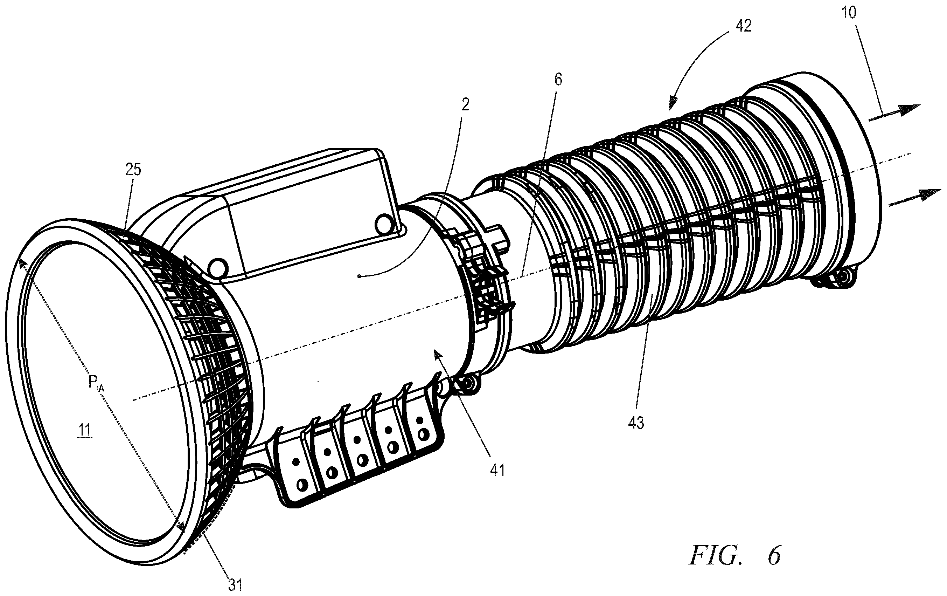

Im gezeigten Ausführungsbeispiel ist die Ansaugöffnung 14 des Aufnahmeraums 3 als Kreisfläche mit einem radialen Außendurchmesser A_{A} ausgebildet. Die Luftleitplatte 11 hat insbesondere eine gleiche Form, wobei die Luftleitplatte 11 einen radialen Außendurchmesser P_{A} aufweist, der größer als der radiale Außendurchmesser A_{A} der Ansaugöffnung 14 ist. Die Luftleitplatte 11 kann auch abweichend von einer Kreisfläche ausgebildet sein. Die Luftleitplatte 11 ist in X-Richtung und in Y-Richtung mit größeren Außenabmessungen ausgebildet als die Ansaugöffnung 14, wie auch die Ansicht in Fig. 6 zeigt. Die Längsmittelachse 6 des Gehäuseabschnitts 2 bildet die Z-Achse des angenommenen Koordinatensystems.

Der Luftleitkonus 21 hat eine Basis 27 bzw. einen Konusfuß, dessen Basisdurchmesser D_{B} vorteilhaft dem Außendurchmesser P_{A} der Luftleitplatte 11 entspricht. Im gezeigten Ausführungsbeispiel ist der Basisdurchmesser D_{B} etwa 1% bis 10% kleiner, insbesondere 4% bis 8% kleiner als der Außendurchmesser P_{A} der Luftleitplatte 11.

Der Luftleitkonus 21 endet in einem Endabschnitt 23 mit einer Stirnseite 22. Die Stirnseite 22 ist konkav gewölbt. Die Stirnseite 22 übergreift das zugewandte Ende der Gebläsenabe 9 berührungslos. Im gezeigten Ausführungsbeispiel liegt die Stirnseite 22 mit einem über die Fläche der Stirnseite 22 insbesondere gleichen Abstand d zur Gebläsenabe 9. Der Abstand d ist ein geringer Abstand von zweckmäßig 0 mm bis 1 mm. Der geringe Abstand d kann vorteilhaft 0 mm bis 5 mm, insbesondere 1 mm bis 25 mm betragen. Die Längsmittelachse des Luftleitkonus 21 liegt zweckmäßig auf der Längsmittelachse 6 des Aufnahmeraums 3.

Die Abmessung der Stirnseite 22 ist derart ausgelegt, dass der maximale Durchmesser Dₘₐₓ der Stirnseite 22 kleiner ist als der maximale Nabendurchmesser Nₘₐₓ. Der maximale Durchmesser Dₘₐₓ der Stirnseite 22 ist insbesondere 10% bis 30%, vorzugsweise 20% kleiner als der Nabendurchmesser Nₘₐₓ.

Zwischen der Luftleitplatte 11 und dem Gehäuseabschnitt 2 ist ein Spalt 20 ausgebildet, über den der Ansaugöffnung 14 Ansaugluft 30 zugeführt ist. Die konstruktive Gestaltung ist so ausgelegt, dass die über den Spalt 20 eintretende Ansaugluft 30 über einen Umlenkwinkel 24 von mehr als 90° der Ansaugöffnung 14 zugeführt ist. Vorteilhaft ist der Umlenkwinkel 24 bis zu 180° gewählt. Im gezeigten Ausführungsbeispiel ist der Umlenkwinkel der zugeführten Ansaugluft 30 mit 120° vorgesehen.

Die Zuführung der Ansaugluft erfolgt über den gesamten Umfang der Aufnahmeöffnung 14. Der Spalt 20 erstreckt sich in Umfangsrichtung des Gebläseabschnitts 2 über einen Umfangswinkel um die Längsmittelachse 6 von bis zu 360°, vorzugsweise 360°.

Der zwischen dem Gehäuseabschnitt 2 und der Luftleitplatte 11 ausgebildete Spalt 20 weist eine Lufteintrittsfläche 31 auf, die unter einem Winkel 34 zur Längsmittelachse 6 liegt. Der Winkel 34 öffnet zur Ausblasöffnung 15 und beträgt im gezeigten Ausführungsbeispiel etwa 145°. Bevorzugt liegt die Größe des Winkels 34 zwischen 90° und 175°. In einer vorteilhaften Ausführungsform liegt die Lufteintrittsfläche 31 parallel zur Längsmittelachse 6.

In vorteilhafter Weiterbildung ist der Spalt 20 als Luftzufuhrkanal 18 ausgebildet Der Luftzufuhrkanal 18 verläuft von einer Lufteintrittsfläche 31 am Ringspalt 20 axial zur Ansaugöffnung 14 und in Umfangsrichtung um die Längsmittelachse 6 über 360°.

Die Lufteintrittsfläche 31 des Luftzufuhrkanals 18 ist so ausgerichtet, dass der Luftzufuhrkanal 18 von der Lufteintrittsfläche 31 zur Ansaugöffnung 14 einen Umlenkwinkel 24 von mehr als 90° aufweist. Vorteilhaft ist der Luftzufuhrkanal 18 mit einem Umlenkwinkel von bis zu 180° ausgebildet. Insbesondere ist der Luftzufuhrkanal 18 mit einem Umlenkwinkel von 120° ausgebildet.

Im gezeigten Ausführungsbeispiel ist die Ansaugöffnung 14 des Aufnahmeraums 3 als Kreisfläche mit einem radialen Außendurchmesser A_{A} ausgebildet. Die Luftleitplatte 11 ist ebenfalls als Kreisfläche mit einem radialen Außendurchmesser P_{A} ausgebildet, wie auch in Fig. 6 dargestellt. Der Außendurchmesser P_{A} der Luftleitplatte ist größer als der radiale Außendurchmesser A_{A} der Ansaugöffnung 14, so dass der Spalt 20 als Ringspalt ausgebildet ist. Der Ringspalt ist als Luftzufuhrkanal 18 weitergebildet und wird einerseits von der Mantelfläche 26 des Luftleitkonus 21 und andererseits von der Umfangswand 17 des Gehäuseabschnitts 2 begrenzt. Der Luftzufuhrkanal 18 verläuft somit von einer Lufteintrittsfläche 31 am als Ringspalt ausgebildeten Spalt 20 axial zur Ansaugöffnung 14 und erstreckt sich in Umfangsrichtung um die Längsmittelachse 6 über 360° Umfangswinkel. Der Luftzufuhrkanal 18 ist insbesondere als toroidförmiger Kanal ausgebildet.

In vorteilhafter Weiterbildung der Erfindung ist vorgesehen, dass zwischen Luftleitplatte 11 und dem Gehäuseabschnitt 2 der Gebläseeinheit 1 ein den Spalt 20 abdeckendes Schutzgitter 25 vorgesehen ist. Das Schutzgitter 25 verhindert einen mechanischen Eingriff in den Spalt 20. Insbesondere ist vorgesehen, dass die Luftleitplatte 11 durch das an der Gehäuseeinheit 1 festgelegte Schutzgitter 25 mechanisch an dem Gehäuseabschnitt 2 gehalten ist. Der Luftleitkonus 21 kragt von der Luftleitplatte 11 frei in Richtung auf die Ansaugöffnung 14 ab und überspannt mit seiner insbesondere konkav ausgebildeten Stirnseite 22 die Gebläsenabe 9.

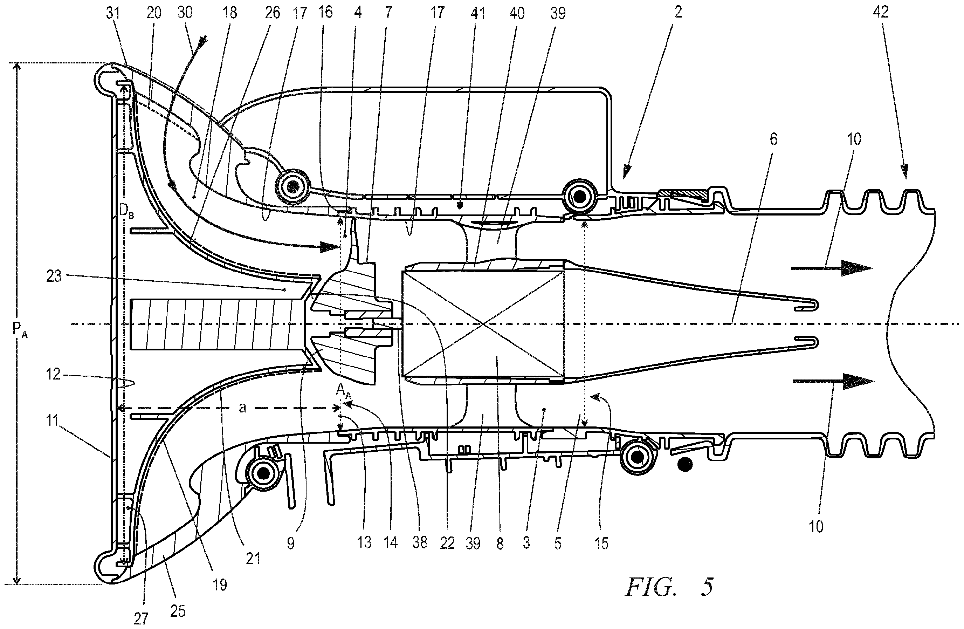

Im Ausführungsbeispiel nach Fig. 5 trägt der Luftleitkonus 21 eine geräuschdämmende Beschichtung. Vorteilhaft ist vorgesehen, dass auf der Mantelfläche 26 des Luftleitkonus 21 eine schall dämmende Auflage 19 aufgebracht ist. Die schalldämmende Auflage kann ein schalldämmender Schaumstoff oder dgl. Material sein.

Wie Fig. 5 zeigt, ist die gesamte Mantelfläche 26 des Luftleitkonus mit der schalldämmenden Auflage 19 versehen. Die schalldämmende Auflage 19 erstreckt sich vom Rand der Stirnseite 22 bis zum Rand der Basis 27 des Luftleitkonus 21.

## Patentansprüche

1. Gebläseeinheit für ein tragbares, handgeführtes Blasgerät mit einem Gehäuseabschnitt (2) und einem im Gehäuseabschnitt (2) ausgebildeten, rohrförmigen Aufnahmeraum (3) mit einem ersten axialen Ende (4) und einem zweiten axialen Ende (5) sowie mit einer Längsmittelachse (6), und mit einem Axialgebläse (7) zur Erzeugung eines Blasluftstroms (10), wobei das Axialgebläse (7) von einem Antriebsmotor (8) angetrieben ist und das Axialgebläse (7) in dem Aufnahmeraum (3) des Gehäuseabschnitts (2) angeordnet ist, und mit einer zentralen Gebläsenabe (9) des Axialgebläses (7), die zur Längsmittelachse (6) des Aufnahmeraums (3) ausgerichtet liegt, wobei der Aufnahmeraum (3) an seinem ersten axialen Ende (4) eine Ansaugöffnung (14) und an seinem zweiten axialen Ende (5) eine Ausblasöffnung (15) aufweist,
**dadurch gekennzeichnet,**
**dass** mit einem axialen Abstand (a) vor der Ansaugöffnung (14) eine Luftleitplatte (11) angeordnet ist,
**dass** die Luftleitplatte (11) Außenabmessungen aufweist, die größer als die Außenabmessungen der Ansaugöffnung (14) sind,
und **dass** zwischen der Luftleitplatte (11) und einem Außenrand (16) des Gehäuseabschnittes (2) ein Ansaugluft zuführender Spalt (20) ausgebildet ist.

2. Gebläseeinheit nach Anspruch 1,
**dadurch gekennzeichnet, dass** sich der Spalt (20) über einen Umfangswinkel von bis zu 360° um die Längsmittelachse (6) des Aufnahmeraums (3) erstreckt.

3. Gebläseeinheit nach Anspruch 1,
**dadurch gekennzeichnet, dass** die über den Spalt (20) eintretende Ansaugluft (30) über einen Umlenkwinkel (24) von mehr als 90°, insbesondere einem Umlenkwinkel (24) von bis zu 180° der Ansaugöffnung (14) zugeführt ist.

4. Gebläseeinheit nach Anspruch 1,
**dadurch gekennzeichnet, dass** die Ansaugöffnung (14) als Kreisfläche mit einem radialen Außendurchmesser (A_{A}) ausgebildet und die Luftleitplatte (11) einen radialen Außendurchmesser (P_{A}) aufweist, der größer als der radiale Außendurchmesser (A_{A}) der Ansaugöffnung (14) ist.

5. Gebläseeinheit nach Anspruch 4,
**dadurch gekennzeichnet, dass** der Spalt (20) als Ringspalt ausgebildet ist.

6. Gebläseeinheit nach Anspruch 1,
**dadurch gekennzeichnet, dass** die Luftleitplatte (11) auf ihrer der Ansaugöffnung (14) zugewandten Plattenseite (12) einen Luftleitkonus (21) trägt.

7. Gebläseeinheit nach Anspruch 6,
**dadurch gekennzeichnet, dass** die Luftleitplatte (11) und der Luftleitkonus (21) einteilig ausgebildet sind, und vorzugsweise aus Kunststoff bestehen.

8. Gebläseeinheit nach Anspruch 6,
**dadurch gekennzeichnet, dass** der Spalt (20) als Luftzufuhrkanal (18) weitergebildet ist, der von dem Luftleitkonus (21) der Luftleitplatte (11) einerseits und der Umfangswand (17) des Gehäuseabschnitts (2) andererseits begrenzt ist.

9. Gebläseeinheit nach Anspruch 8,
**dadurch gekennzeichnet, dass** der Luftzufuhrkanal (18) mit einem Umlenkwinkel (24) von mehr als 90°, insbesondere mit einem Umlenkwinkel (24) von bis zu 180° ausgebildet ist.

10. Gebläseeinheit nach Anspruch 6,
**dadurch gekennzeichnet, dass** der Luftleitkonus (21) zentral zur Ansaugöffnung (14) ausgerichtet liegt und ein freier Endabschnitt (23) des Luftleitkonus (21) mit geringem Abstand (d) vor der Gebläsenabe (9) des Axialgebläses (7) endet.

11. Gebläseeinheit nach Anspruch 10,
**dadurch gekennzeichnet, dass** eine Stirnseite (22) des Endabschnittes (23) des Luftleitkonus (21) konkav gewölbt ist und die Gebläsenabe (9) des Axialgebläses (7) berührungslos übergreift.

12. Gebläseeinheit nach Anspruch 11,
**dadurch gekennzeichnet, dass** der maximale Durchmesser (Dₘₐₓ) der Stirnseite (22) des Luftleitkonus (21) kleiner ist als der maximale Nabendurchmesser (Nₘₐₓ) der Gebläsenabe (9) des Axialgebläses (7).

13. Gebläseeinheit nach Anspruch 6,
**dadurch gekennzeichnet, dass** der Luftleitkonus (21) auf seiner äußeren Mantelfläche (26) eine schalldämmende Auflage (19), insbesondere eine Schaumstoffschicht trägt.

14. Gebläseeinheit nach Anspruch 1,
**dadurch gekennzeichnet, dass** zwischen der Luftleitplatte (11) und dem Gehäuseabschnitt (2) ein den Spalt (20) abdeckendes Schutzgitter (25) vorgesehen ist.

15. Gebläseeinheit nach Anspruch 14,
**dadurch gekennzeichnet, dass** die Luftleitplatte (11) mechanisch durch das Schutzgitter (25) am Gehäuseabschnitt (2) gehalten ist.

16. Gebläseeinheit nach Anspruch 1,
**dadurch gekennzeichnet, dass** die Lufteintrittsfläche (31) des Spaltes (20) der Ausblasöffnung (15) des Aufnahmeraums (3) zugewandt liegt und vorzugsweise zur Längsmittelachse (6) des Aufnahmeraums (3) geneigt liegt.

17. Gebläseeinheit nach Anspruch 1,
**dadurch gekennzeichnet, dass** die Ansaugöffnung (14) des Aufnahmeraums (3) in einer Ebene (13) liegt, auf der die Längsmittelachse (6) des Aufnahmeraums (3) senkrecht steht.

18. Gebläseeinheit nach Anspruch 1,
**dadurch gekennzeichnet, dass** die Luftleitplatte (11) parallel zur Ebene (13) der Ansaugöffnung (14) des Aufnahmeraums (3) liegt.

## Claims

1. Blower unit for a portable, handheld blower apparatus, having a housing section (2) and a tubular receiving space (3), formed in the housing section (2), with a first axial end (4) and a second axial end (5) and with a longitudinal center axis (6), and having an axial blower (7) for generating a blower air flow (10), the axial blower (7) being driven by a drive motor (8) and the axial blower (7) being arranged in the receiving space (3) of the housing section (2), and having a central blower hub (9) of the axial blower (7), said blower hub (9) being aligned with the longitudinal center axis (6) of the receiving space (3), the receiving space (3) having an intake opening (14) at its first axial end (4) and a discharge opening (15) at its second axial end (5),
**characterized in that**
an air guide plate (11) is arranged at an axial distance (a) in front of the intake opening (14),
the air guide plate (11) has external dimensions that are greater than the external dimensions of the intake opening (14),
and a gap (20) that supplies intake air is formed between the air guide plate (11) and an outer periphery (16) of the housing section (2).

2. Blower unit according to claim 1,
**characterized in that** the gap (20) extends through a circumferential angle of up to 360° about the longitudinal center axis (6) of the receiving space (3).

3. Blower unit according to claim 1,
**characterized in that** the intake air (30) entering via the gap (20) is supplied to the intake opening (14) through a deflection angle (24) of more than 90°, in particular a deflection angle (24) of up to 180°.

4. Blower unit according to claim 1,
**characterized in that** the intake opening (14) is in the form of a circular area with a radial outer diameter (A_{A}), and the air guide plate (11) has a radial outer diameter (P_{A}) that is greater than the radial outer diameter (A_{A}) of the intake opening (14).

5. Blower unit according to claim 4,
**characterized in that** the gap (20) is in the form of an annular gap.

6. Blower unit according to claim 1,
**characterized in that** the air guide plate (11) bears an air guide cone (21) on its plate side (12) facing the intake opening (14).

7. Blower unit according to claim 6,
**characterized in that** the air guide plate (11) and the air guide cone (21) are formed in one piece and consist preferably of plastic.

8. Blower unit according to claim 6,
**characterized in that** the gap (20) is developed as an air supply channel (18) that is delimited by the air guide cone (21) of the air guide plate (11) on one side and by the peripheral wall (17) of the housing section (2) on the other side.

9. Blower unit according to claim 8,
**characterized in that** the air supply channel (18) is formed with a deflection angle (24) of more than 90°, in particular with a deflection angle (24) of up to 180°.

10. Blower unit according to claim 6,
**characterized in that** the air guide cone (21) is aligned centrally with the intake opening (14) and a free end section (23) of the air guide cone (21) ends at a slight distance (d) in front of the blower hub (9) of the axial blower (7).

11. Blower unit according to claim 10,
**characterized in that** an end face (22) of the end section (23) of the air guide cone (21) is concavely curved and engages over the blower hub (9) of the axial blower (7) in a contact-free manner.

12. Blower unit according to claim 11,
**characterized in that** the maximum diameter (Dₘₐₓ) of the end face (22) of the air guide cone (21) is smaller than the maximum hub diameter (Nₘₐₓ) of the blower hub (9) of the axial blower (7).

13. Blower unit according to claim 6,
**characterized in that** the air guide cone (21) bears a sound insulating lining (19), in particular a foam layer, on its outer surface (26).

14. Blower unit according to claim 1,
**characterized in that** a protective grating (25) covering the gap (20) is provided between the air guide plate (11) and the housing section (2).

15. Blower unit according to claim 14,
**characterized in that** the air guide plate (11) is held mechanically on the housing section (2) by the protective grating (25).

16. Blower unit according to claim 1,
**characterized in that** the air intake surface (31) of the gap (20) faces the discharge opening (15) of the receiving space (3) and is preferably inclined with respect to the longitudinal center axis (6) of the receiving space (3).

17. Blower unit according to claim 1,
**characterized in that** the intake opening (14) of the receiving space (3) lies in a plane (13) to which the longitudinal center axis (6) of the receiving space (3) is perpendicular.

18. Blower unit according to claim 1,
**characterized in that** the air guide plate (11) is parallel to the plane (13) of the intake opening (14) of the receiving space (3).

## Revendications

1. Unité soufflante pour un souffleur portable, à commande manuelle, munie d'une section de boîtier (2) et d'une chambre de réception tubulaire (3) formée dans la section de boîtier (2), munie d'une première extrémité axiale (4) et d'une deuxième extrémité axiale (5), ainsi que munie d'un axe médian longitudinal (6), et munie d'une soufflante axiale (7) pour la génération d'un courant d'air soufflé (10), la soufflante axiale (7) étant entraînée par un moteur d'entraînement (8) et la soufflante axiale (7) étant agencée dans la chambre de réception (3) de la section de boîtier (2), et munie d'un moyeu de soufflante central (9) de la soufflante axiale (7), qui est situé dirigé vers l'axe médian longitudinal (6) de la chambre de réception (3), la chambre de réception (3) comprenant à sa première extrémité axiale (4) une ouverture d'aspiration (14) et à sa deuxième extrémité axiale (5) une ouverture de soufflage (15),
**caractérisée en ce que**
une plaque de conduction d'air (11) est agencée à un écart axial (a) avant l'ouverture d'aspiration (14),
**en ce que** la plaque de conduction d'air (11) présente des dimensions extérieures qui sont supérieures aux dimensions extérieures de l'ouverture d'aspiration (14),
et **en ce qu'**une fente d'amenée d'air aspiré (20) est formée entre la plaque de conduction d'air (11) et un bord extérieur (16) de la section de boîtier (2).

2. Unité soufflante selon la revendication 1,
**caractérisée en ce que** la fente (20) s'étend sur un angle circonférentiel de jusqu'à 360° autour de l'axe médian longitudinal (6) de la chambre de réception (3).

3. Unité soufflante selon la revendication 1,
**caractérisée en ce que** l'air aspiré (30) entrant par l'intermédiaire de la fente (20) est amené à l'ouverture d'aspiration (14) par l'intermédiaire d'un angle de déviation (24) de plus de 90°, notamment d'un angle de déviation (24) de jusqu'à 180°.

4. Unité soufflante selon la revendication 1,
**caractérisée en ce que** l'ouverture d'aspiration (14) est configurée sous la forme d'une surface circulaire ayant un diamètre extérieur radial (A_{A}) et la plaque de conduction d'air (11) présente un diamètre extérieur radial (P_{A}), qui est supérieur au diamètre extérieur radial (A_{A}) de l'ouverture d'aspiration (14).

5. Unité soufflante selon la revendication 4,
**caractérisée en ce que** la fente (20) est configurée sous la forme d'une fente annulaire.

6. Unité soufflante selon la revendication 1,
**caractérisée en ce que** la plaque de conduction d'air (11) porte un cône de conduction d'air (21) sur son côté de plaque (12) tourné vers l'ouverture d'aspiration (14).

7. Unité soufflante selon la revendication 6,
**caractérisée en ce que** la plaque de conduction d'air (11) et le cône de conduction d'air (21) sont configurés d'un seul tenant, et sont de préférence constitués de matière plastique.

8. Unité soufflante selon la revendication 6,
**caractérisée en ce que** la fente (20) est perfectionnée sous la forme d'un canal d'amenée d'air (18), qui est délimité par le cône de conduction d'air (21) de la plaque de conduction d'air (11) d'un côté et la paroi circonférentielle (17) de la section de boîtier (2) de l'autre côté.

9. Unité soufflante selon la revendication 8,
**caractérisée en ce que** le canal d'amenée d'air (18) est configuré avec un angle de déviation (24) de plus de 90°, notamment avec un angle de déviation (24) de jusqu'à 180°.

10. Unité soufflante selon la revendication 6,
**caractérisée en ce que** le cône de conduction d'air (21) est situé dirigé centralement vers l'ouverture d'aspiration (14) et une section d'extrémité libre (23) du cône de conduction d'air (21) se termine à un faible écart (d) avant le moyeu de soufflante (9) de la soufflante axiale (7).

11. Unité soufflante selon la revendication 10,
**caractérisée en ce qu'**un côté frontal (22) de la section d'extrémité (23) du cône de conduction d'air (21) est incurvé de manière concave et vient en prise sans contact sur le moyeu de soufflante (9) de la soufflante axiale (7).

12. Unité soufflante selon la revendication 11,
**caractérisée en ce que** le diamètre maximal (Dₘₐₓ) du côté frontal (22) du cône de conduction d'air (21) est inférieur au diamètre maximal (Nₘₐₓ) du moyeu de soufflante (9) de la soufflante axiale (7).

13. Unité soufflante selon la revendication 6,
**caractérisée en ce que** le cône de conduction d'air (21) porte sur sa surface d'enveloppe extérieure (26) un revêtement amortissant le bruit (19), notamment une couche de mousse.

14. Unité soufflante selon la revendication 1,
**caractérisée en ce qu'**une grille de protection (25) recouvrant la fente (20) est prévue entre la plaque de conduction d'air (11) et la section de boîtier (2).

15. Unité soufflante selon la revendication 14,
**caractérisée en ce que** la plaque de conduction d'air (11) est maintenue mécaniquement par la grille de protection (25) sur la section de boîtier (2).

16. Unité soufflante selon la revendication 1,
**caractérisée en ce que** la surface d'entrée d'air (31) de la fente (20) est située tournée vers l'ouverture de soufflage (15) de la chambre de réception (3) et est de préférence située inclinée par rapport à l'axe médian longitudinal (6) de la chambre de réception (3).

17. Unité soufflante selon la revendication 1,
**caractérisée en ce que** l'ouverture d'aspiration (14) de la chambre de réception (3) est située dans un plan (13), auquel l'axe médian longitudinal (6) de la chambre de réception (3) est perpendiculaire.

18. Unité soufflante selon la revendication 1,
**caractérisée en ce que** la plaque de conduction d'air (11) est située parallèlement au plan (13) de l'ouverture d'aspiration (14) de la chambre de réception (3).
